# EUROPEAN PATENT APPLICATION

(11) **EP 4 782 322 A1**
(43) Date of publication of application: **29.07.2026**
(21) Application number: 25153822.9
(22) Date of filing: 24.01.2025
(51) Int. Cl.: B63H 5/10, B63H 5/125, B63H 21/17, B63H 23/24, F16C 19/34, B63H 23/36, B63B 81/00, B63H 20/00, B63H 23/32

(54) **AZIMUTHING PROPULSION UNIT**

(71) Applicant: ABB Oy, 00380 Helsinki (FI)
(72) Inventor: KEKKI, Tuomas, 00980 Helsinki (FI); PELLINEN, Petri, 00980 Helsinki (FI); CLARKSON, Matthew, 00980 Helsinki (FI)
(74) Representative: Zimmermann & Partner Patentanwälte mbB

(57) **Abstract**

According to an embodiment, an azimuthing propulsion unit is described. The azimuthing propulsion unit comprises a rotatable drive end (DE) inner shaft, a rotatable DE outer shaft, wherein the DE inner shaft runs at least partially within the DE outer shaft, and a DE inner bearing arranged between the DE outer shaft and the DE inner shaft, wherein the DE outer shaft comprises at least one hatch.

## Description

### TECHNICAL FIELD

Embodiments of the present invention relate to an azimuthing propulsion unit. Further embodiments relate to a method of maintaining an azimuthing propulsion unit.

### BACKGROUND

Azimuthing propulsion units provide an efficient way to propel marine vessels. Further, azimuthing propulsion units allow for an improved maneuverability of marine vessels. In azimuthing propulsion units, at least one marine propeller attached to a rotatable pod provides thrust. A direction of the thrust may be controlled via a rotation of the rotatable pod. In typical azimuthing propulsion units, at least one electric motor driving the at least one marine propeller is integrated in the pod.

Maintaining azimuthing propulsion units commonly requires dry-docking, which is a time-consuming process. Thus, dry-docking a marine vessel to maintain the azimuthing propulsion units requires for the marine vessel to be taken out of service in order for maintenance procedures, routine or not, to be undertaken. Therefore, azimuthing propulsion units that provide a high efficiency, durability and maintainability, in particular in view of the restricted amount of space available in the pod, are desired. Azimuthing propulsion units with reduced maintenance efforts might be desired.

### DISCLOSURE OF THE INVENTION

In the view of the foregoing, the present invention is directed to an azimuthing propulsion unit and a method of maintaining an azimuthing propulsion unit.

According to an aspect of the present invention, an azimuthing propulsion unit comprising a rotatable drive end (DE) inner shaft; a rotatable DE outer shaft, wherein the DE inner shaft runs at least partially within the DE outer shaft; and a DE inner bearing arranged between the DE outer shaft and the DE inner shaft; wherein the DE outer shaft comprises a hatch, is provided.

According to another aspect of the present invention, a method of maintaining of an azimuthing propulsion unit according to any of the embodiments described herein is provided. The method comprises: opening a hatch of a DE outer shaft of the azimuthing propulsion unit; and accessing a DE inner bearing arranged between the DE outer shaft and a DE inner shaft.

According to some embodiments, the azimuthing propulsion unit is configured to propel a marine vessel. In particular, the marine vessel can comprise at least one azimuthing propulsion unit according to embodiments described herein. The marine vessel as described herein comprises seagoing or inland marine vessels. In particular, the marine vessel comprises ships and boats. In some embodiments, the marine vessel comprises merchant ships, in particular for transporting goods. In particular, the marine vessel can comprise a container vessel, a Ro-Ro or car carrier, a tanker or shuttle tanker, a liquid natural gas (LNG) carrier or a floating storage, and regasification unit. In some embodiments, the marine vessel comprises ferries, in particular single- and double-ended ferries, cruise ships, water buses, yachts. In some embodiments, the marine vessel comprises offshore energy vessels, in particular service operation vessels (SOVs), cable laying vessels (CLVs), foundation installation vessels (FIVs), offshore construction (OCVs) and support vessels (OSVs), platform supply vessels (PSVs), and anchor-handling tug supply vessels (AHTS). In some embodiments, the marine vessel comprises research and survey vessels or other special purpose vessels, such as dredgers, heavy lift vessels, or towboats. In some embodiments, the marine vessel comprises ice-going marine vessels, in particular icebreakers. In some embodiments, the marine vessel can comprise navy or coast guard vessels.

The marine vessel typically comprises a hull. A pod of the azimuthing propulsion unit is attached to the hull of the marine vessel, in particular at the bottom of the hull. Typically, the hull defines a vessel interior and a vessel exterior. Space confined by the hull and configured to be isolated from sea water can be defined as the vessel interior. Space outside the hull, and in particular the sea, can be defined as the vessel exterior. Typically, the vessel interior is substantially free of sea water and substantially dry.

In some embodiments, the marine vessel can comprise a plurality of azimuthing propulsion units. In particular, the marine vessel can comprise 2, 3, 4, or more azimuthing propulsion units. Typically, each of the plurality of azimuthing propulsion units can be controlled separately. In some embodiments, the marine vessel can comprise a single azimuthing propulsion unit with a single pod. In some embodiments, at least one azimuthing propulsion unit can be combined with one or more further marine propulsion unit on a single marine vessel.

Typically, the azimuthing propulsion unit comprises a pod with a pod hull. The pod is configured to be rotatably attached to the hull of the marine vessel, particularly at the bottom of the hull of the marine vessel. The pod can be rotated about a substantially vertical rotation axis of the azimuthing propulsion unit. In particular, the pod can be rotated by at least 270°, at least 315° or at least 360° about the substantially vertical rotation axis of the azimuthing propulsion unit. In typical embodiments, the rotation of the pod about the substantially vertical rotation axis of the azimuthing propulsion unit is not restricted, in particular not mechanically restricted.

Typically, the pod comprises a hull cap at a first end of the pod and a propeller unit, in particular a pushing or pulling propeller unit, attached to a second end of the pod. The first end of the pod can also be described as a non-driving end (NDE), and the second end of the pod can also be described as a driving end (DE), of the pod. The propeller unit typically rotates about a rotation axis of the propeller unit. The rotation axis of the propeller unit can be substantially perpendicular to the vertical rotation axis of the azimuthing propulsion unit.

In typical embodiments, the propeller unit comprises an outer shaft propeller and an inner shaft propeller. Typically, the outer shaft propeller is arranged closer to the hull than the inner shaft propeller. In a pushing propeller unit, the outer shaft propeller can also be described as front propeller and the inner shaft propeller can be described as the rear propeller; and vice versa for a pulling propeller unit. In particular, the outer shaft propeller is arranged closer to the vertical rotation axis than the inner shaft propeller. Typically, the outer shaft propeller and the inner shaft propeller are arranged adjacent to each other. The outer shaft propeller and the inner shaft propeller rotate about the rotation axis of the propeller unit.

Typically, the propeller unit comprises a contra rotating propeller unit. In particular, the outer shaft propeller can be configured to rotate in a first direction, particularly about the rotation axis of the propeller unit, and the inner shaft propeller can be configured to rotate in a second direction opposite to the first direction, particularly about the rotation axis of the propeller unit. In other words, the outer shaft propeller can rotate clockwise and the inner shaft propeller can rotate counterclockwise, or vice versa, about the same rotation axis. A contra rotating propeller unit can advantageously allow for a higher hydrodynamic efficiency than other propeller concepts, in particular with respect to single propellers.

In some embodiments, the outer shaft propeller has a first diameter and the inner shaft propeller has a second diameter with the second diameter being different from the first diameter, particularly the first diameter being larger than the second diameter. Typically, the outer shaft propeller comprises a first number of first blades and the inner shaft propeller comprises a second number of second blades. Typically, the second number can be different from the first number. The outer shaft propeller can comprise 3, 4, 5, 6, or 8 first blades. The inner shaft propeller can comprise 3, 4, 5, 6, or 8 second blades. In some embodiments, the outer shaft propeller comprises one more first blade than the inner shaft propeller comprises second blades. Exemplarily, the outer shaft propeller comprises 6 first blades and the inner shaft propeller comprises 5 second blades. In some embodiments, the outer shaft propeller and the inner shaft propeller can comprise the same number of blades, in particular 3, 4, 5, 6, or 8 first and second blades, respectively. The outer shaft propeller and/or the inner shaft propeller can each be manufactured as a monoblock or in components, as a built-up propeller.

Typically, the propeller unit is driven by an electric motor. Typically, the electric motor has a power of at least 100 kW, at least 1 MW, at least 2 MW, at least 5 MW, at least 10 MW or at least 15 MW. The electric motor is typically arranged within the pod. Particularly, the electric motor is mechanically connected to the propeller gearlessly. Typically, a rotation axis of the electric motor is identical to the rotation axis of the propeller unit. In particular, an output shaft of the electric motor can be identical to the drive shaft of the propeller unit or can be gearlessly connected to a drive shaft of the propeller unit. The output shaft of the electric motor typically is coaxial to the drive shaft of the propeller unit. In typical embodiments, for a propeller unit comprising an outer shaft propeller and an inner shaft propeller, in particular for the contra rotating propeller unit, the outer shaft propeller and the inner shaft propeller can be driven by the same electric motor.

The electric motor typically comprises a contra rotating electric motor. In particular, the contra rotating electric motor comprises a dual rotor electric motor with an outer rotor and an inner rotor configured to rotate in opposite directions about a rotation axis of the electric motor. Typically, the rotation axis of the electric motor can be coaxially arranged with the rotation axis of the propeller unit. Typically, the electric motor is a synchronous electric motor. Typically, the outer rotor comprises windings to be supplied with an electric current for the operation of the electric motor. The inner rotor can be a permanent magnet rotor or an externally excited synchronous rotor.

In some embodiments, the drive shaft of the propeller comprises an outer shaft and an inner shaft. The outer shaft and the inner shaft are typically coaxially arranged. Typically, the outer rotor drives the outer shaft. The outer shaft is typically mechanically connected to the outer shaft propeller gearlessly. Typically, the inner rotor drives the inner shaft. The inner shaft is typically mechanically connected to the inner shaft propeller gearlessly. Typically, the inner shaft is arranged inside the outer shaft; in other words, an inside radius of the outer shaft exceeds an outside radius of the inner shaft. The inner shaft and the outer shaft rotate about the same rotation axis, and in particular about the rotation axis of the electric motor. Typically, the inner shaft is supported in the pod by a drive end, DE, inner bearing and a non-drive end, NDE, inner bearing. Typically, the outer shaft is supported in the pod by a drive end, DE, outer bearing and a non-drive end, NDE, outer bearing. The NDE inner bearing and/or the NDE outer bearing can each comprise an axial bearing and a radial bearing, particularly within the same bearing housing. Employing a contra rotating electric motor can advantageously allow to drive the contra rotating propeller with a single electric motor gearlessly. Thereby, a more compact and efficient drive train can be provided.

In some embodiments, the azimuthing propulsion unit comprises a rotatable drive end (DE) inner shaft, a rotatable DE outer shaft, wherein the DE inner shaft runs at least partially within the DE outer shaft, and a DE inner bearing arranged between the DE outer shaft and the DE inner shaft, wherein the DE outer shaft comprises at least one hatch.

The azimuthing propulsion unit described herein can permit the azimuthing propulsion unit to be maintained without requiring the marine vessel to be dry-docked. Dry docking a marine vessel is a time and resource consuming process which ultimately adversely affects an efficiency of the marine vessel.

According to some embodiments, the at least one hatch can be, for example, configured to provide access to the DE inner bearing. According to some embodiments, the at least one hatch can be, for example, configured to be accessed by a user from within the azimuthing propulsion unit. In order for the hatch to provide sufficient access to the DE inner bearing, the hatch can be of a defined shape and size. For example, the hatch can be any of the following shapes, but not limited to: a rectangle, a circle, a triangle, a rhombus, a pentagon, a hexagon, etc. For example, the hatch can be rectangular with a length of at least 0.2 m and/or up to 1.5 m, preferably at least 0.3 m or at least 0.4 m and/or up to 0.6 m or up to 0.5 m, and a width of at least 0.1 m and/or up to 0.8 m, preferably at least 0.3 m and/or up to 0.5 m or up to 0.4 m. In a further example, the hatch 302 is circular with a diameter of at least 0.2 m and/or up to 1.5 m, preferably at least 0.3 m and/or up to 0.7 m.

The DE outer shaft can comprise, for example, two hatches, three hatches, four hatches, five hatches, etc. The azimuthing propulsion unit comprising two or more hatches can comprise two or more of the same hatch, two or more different hatches, or a combination thereof. For example, wherein the azimuthing propulsion unit comprises four hatches, each of the four hatches can be of a different shape and size, the same shape and size, or a combination thereof. In typical embodiments, the at least one hatch comprises at least one seal. In particular, the at least one seal is a hatch seal. The at least one hatch seal can prevent fluid, such as lubricating oil, from exiting a contained volume.

The at least one hatch can be configured to permit the user to access the DE inner shaft from within the azimuthing propulsion unit. The hatch can be configured to permit the user to access a region between the DE inner shaft and the DE outer shaft. For example, the user can access the DE inner bearing from within the azimuthing propulsion unit through the at least one hatch. The at least one hatch can be opened and/or removed to gain access to the region between the DE inner shaft and the DE outer shaft. For example, the at least one hatch can be opened through a push-to-unlock mechanism. For example, the at least one hatch can be opened by removing at least one fixing mechanism, such as a screw. The at least one hatch can be reused. For example, the at least one hatch can be opened and closed any number of times, for example, 20 times, 50 times, 100 times, 500 times, or more.

The at least one hatch can permit for maintenance to be done on the DE inner shaft and/or the DE outer shaft from within the azimuthing propulsion unit. The maintenance can include checking, preparing, removing, replacing, adding, or any combination thereof of the components in the drive end of the azimuthing propulsion unit.

According to some embodiments described herein, the DE inner bearing comprises inner bearing pads. According to some embodiments described herein, the DE inner bearing comprises an inner roller bearing. According to some embodiments described herein, the DE inner bearing comprises an inner bearing pad and/or an inner roller bearing. The DE inner bearing and/or the inner bearing pads can be arranged distally in relation to the at least one hatch. According to typical embodiments, the DE inner bearing is a segmented bearing. For example, the DE inner bearing comprises two or more inner bearing pads, for example 3 bearing pads, 5 bearing pads, 8 bearing pads, 12 bearing pads, or any predefined number of bearing pads. The inner bearing pads can be arranged around the DE inner shaft, and in particular around an entire circumference of the DE inner shaft. The inner bearing pads can be configured to be displaced along the DE inner shaft. The inner bearing pads can be slide bearing pads. The inner bearing pads can be configured to be slid along the DE inner shaft.

Typically, the DE inner bearing and/or inner bearing pads can be displaced proximally, and in particular, proximally towards the at least one hatch. The DE inner bearing and/or inner bearing pads can be displaced continuously or in intervals. The DE inner bearing and/or inner bearing pads can be displaced axially by a predetermined distance, for example, in line with the at least one hatch. The DE inner bearing and/or inner bearing pads can be displaced axially by a distance determined by the user, for example, 0.3 m. The DE inner bearing and/or inner bearing pads can be displaced according to the maintenance procedure taking place.

According to some embodiments described herein, the azimuthing propulsion unit can further comprise a DE inner distal seal. The DE inner distal seal can be arranged between the DE inner shaft and the DE outer shaft. The DE inner distal seal can be arranged towards a drive end, and in particular the drive and of the azimuthing propulsion unit. The DE inner distal seal can comprise at least one water seal and/or at least one lubricant seal. For example, the DE inner distal seal can prevent water from entering into the azimuthing propulsion unit and/or can prevent lubricant, for example oil, from exiting the azimuthing propulsion unit. The DE inner distal seal can prolong the lifespan of the azimuthing propulsion unit and/or can prevent on environment from being contaminated.

Typically, the DE inner distal seal can be displaced proximally, and in particular, proximally towards the at least one hatch. The DE inner distal seal can be displaced continuously or in intervals. The DE inner distal seal can be displaced axially by a predetermined distance, for example, in line with the at least one hatch. The DE inner distal seal can be displaced axially by a distance determined by the user, for example, 0.3 m. The DE inner distal seal can be displaced according to the maintenance procedure taking place.

According to some embodiments described herein, the azimuthing propulsion unit can further comprise a DE inner proximal seal. The DE inner proximal seal can be arranged between the DE inner shaft and the DE outer shaft. The DE inner proximal seal can be arranged towards the NDE. In typical embodiments, the DE inner proximal seal can be arranged distally to the at least one hatch. The DE inner proximal seal can comprise at least one seal. For example, the DE inner proximal seal comprises 2, 3, 4, 5, 6, 8, 10, or any number of seals. The DE inner proximal seal can comprise at least one oil seal. For example, the DE inner proximal seal can prevent lubricant from leaving at least one desired region.

Typically, the DE inner proximal seal can be displaced distally, and in particular, distally towards the at least one hatch. The DE inner proximal seal can be displaced continuously or in intervals. The DE inner proximal seal can be displaced by a predetermined distance, for example, in line with the at least one hatch. The DE inner proximal seal can be displaced by a distance determined by the user, for example, 0.3 m. The DE inner proximal seal can be displaced according to the maintenance procedure taking place.

Typically, the DE inner distal seal and/or the DE inner proximal seal can comprise two or more seals. The DE inner distal seal and/or the DE inner proximal seal can be attached to at least the DE inner shaft. For example, the DE inner distal seal and/or the DE inner proximal seal can be attached to the DE inner shaft and the DE outer shaft.

According to some embodiments described herein, the azimuthing propulsion unit can further comprise a pod, wherein the pod comprises a pod hull. The pod can permit for the DE inner bearing and/or the DE inner bearing pads and/or the DE inner distal seal and/or the DE inner proximal seal to be maintained from within the azimuthing propulsion unit. This can be beneficial in that, for example, for the DE inner bearing and/or the DE inner bearing pads and/or the DE inner distal seal and/or the DE inner proximal seal to be maintained without requiring the azimuthing propulsion unit and over the marine vessel to be dry-docked. This can for example, reduce time required for maintenance and/or permit for an increase in maintenance opportunities available. For example, the marine vessel can be docked at a port as part of its schedule and the DE inner bearing and/or the DE inner bearing pads and/or the DE inner distal seal and/or the DE inner proximal seal can be maintained during this time at the port. For example, the user can enter the azimuthing propulsion unit through a vessel interior of the marine vessel, and can proceed to accessing any of the aforementioned components.

According to some embodiments described herein the azimuthing propulsion unit can further comprise a DE outer bearing. In some embodiments, the DE outer bearing can comprise an outer bearing pad. According to some embodiments described herein, the DE outer bearing comprises an outer roller bearing. According to some embodiments described herein, the DE outer bearing comprises an outer bearing pad and/or an outer roller bearing. The DE outer bearing and/or the outer bearing pads can be arranged distally in relation to the at least one hatch. According to typical embodiments, the DE outer bearing is a segmented bearing. For example, the DE outer bearing comprises two or more outer bearing pads, for example 3 bearing pads, 5 bearing pads, 8 bearing pads, 12 bearing pads, or any predefined number of bearing pads. The outer bearing pads can be arranged around the DE outer shaft, and in particular around an entire circumference of the DE outer shaft. The outer bearing pads can be configured to be displaced along the DE outer shaft. The outer bearing pads can be slid. The outer bearing pads can be configured to be slid along the DE outer shaft. The DE outer bearing and/or outer bearing pads can be displaced radially from the DE outer shaft. In typical embodiments, the DE outer bearing and/or outer bearing pads can be slid and/or displaced radially.

The DE inner bearing and the DE outer bearing can be coupled. For example, the DE inner bearing and the DE outer bearing can be fluidly coupled. For example, the DE inner bearing can comprise a DE inner bearing chamber and the DE outer bearing can comprise a DE outer bearing chamber. In particular, the DE inner bearing chamber and the DE outer bearing chamber can be fluidly coupled. In typical embodiments, the DE outer shaft comprises at least one bore to fluidly couple the DE inner bearing and the DE outer bearing. The at least one bore can be through the DE outer shaft. Typically, the at least one bore is radially through the DE outer shaft. The fluid coupling can comprise a lubricant, such as grease and/or oil. The DE inner bearing and the DE outer bearing can be arranged coaxially to the rotation axis. The DE outer bearing can at least partially overlap the DE inner bearing. For example, the DE outer bearing and/or the outer bearing pads can be displaced proximally. In particular, the DE outer bearing and/or the outer bearing pads can be displaced axially. The DE outer bearing and/or the outer bearing pads can be displaced axially and proximally along the DE outer shaft. The outer bearing pads can comprise slide bearing pads.

The DE inner bearing and/or the inner bearing pads and/or the DE outer bearing and/or the outer bearing pads can be configured to be individually displaced and/or changed. The DE inner bearing can be rotated with respect to the DE inner shaft, the DE outer shaft, or both. For example, a gliding layer is between the DE inner bearing and the DE inner shaft, the DE outer shaft, or both. The DE inner bearing can be rotated along the DE inner shaft, the DE outer shaft, or both. The DE outer bearing can be rotated with respect to the DE outer shaft, the DE outer bearing housing, or both. For example, a gliding layer is between the DE outer bearing and the DE outer shaft, the DE outer bearing housing, or both. The DE outer bearing can be rotated along the DE outer shaft, the DE outer bearing housing, or both.

The azimuthing propulsion unit described herein can enable inner bearing and seal change in a contra rotating propeller. For example, the azimuthing propulsion unit described herein can enable maintenance without removing at least one propeller and/or driving conditions.

According to some embodiments described herein, a method of maintaining an azimuthing propulsion unit is provided. The method of maintaining the azimuthing propulsion unit described herein comprises opening a hatch of a DE outer shaft of the azimuthing propulsion unit; and accessing a DE inner bearing arranged between the DE outer shaft and a DE inner shaft. Typically, the method of maintaining the azimuthing propulsion unit can be performed within the azimuthing propulsion unit described herein. In particular, the method of maintaining the azimuthing propulsion unit can be performed without requiring for the azimuthing propulsion unit and/or a marine vessel to be dry-docked.

According to some embodiments described herein, the method of maintaining the azimuthing propulsion unit can further comprise, after accessing the DE inner bearing to the hatch, displacing the DE inner bearing. The method can comprise releasing the DE inner bearing. In particular, releasing the DE inner bearing can occur prior to displacing the DE inner bearing. For example, the DE inner bearing can be secured between the DE inner shaft and the DE outer shaft. Releasing of the DE inner bearing can enable the displacing of the DE inner bearing. For example, the method comprises displacing the DE inner bearing towards the motor, preferably without removing a portion through the hatch. For example, the method comprises displacing the DE inner bearing at least partially through the hatch. For example, the method comprises displacing the entire DE inner bearing through the hatch.

Typically, displacing the DE inner bearing can comprise removing the DE inner bearing through the hatch. For example, removing the DE inner bearing can comprise proximally displacing the DE inner bearing to a position in line with the hatch. Upon displacing the DE inner bearing to the position in line with the hatch, the method can comprise extracting the DE inner bearing, in particular extracting the DE inner bearing through the hatch. Typically, displacing the DE inner bearing comprises displacing the DE inner bearing to a service position. When the DE inner bearing is at the service position, the method of maintaining the azimuthing propulsion unit typically comprises servicing the DE inner bearing. For example, servicing the DE inner bearing can comprise: repairing, replacing, installing, removing, or any combination thereof. In particular, servicing the DE inner bearing can be for the entire DE inner bearing or at least a portion thereof. For example, servicing the DE inner bearing comprises servicing at least one wearable part. The at least one wearable part can be defined as any part which needs to be serviced, and/or is due for service. Typically, servicing the DE inner bearing is through the hatch. Typically, servicing the DE inner bearing is performed within the hatch. Typically, servicing the DE inner bearing is performed outside the hatch.

Typically, displacing the DE inner bearing can comprise axially displacing the DE inner bearing a distance of at least 0.1 m, 0.2 m, 0.3 m, up to 1.5 m, or any distance therebetween. For example, displacing the DE inner bearing can comprise displacing the DE inner bearing within a region between the DE inner shaft and the DE outer shaft.

Typically, the method of maintaining the azimuthing propulsion unit can further comprise installing the DE inner bearing and/or replacing the DE inner bearing, and in particular with a new DE inner bearing and/or at least a new portion thereof.

According to some embodiments described herein, the method of maintaining the azimuthing propulsion unit can further comprise, after displacing the DE inner bearing, accessing a DE inner distal seal through the hatch, and displacing the DE inner distal seal. Typically, displacing the DE inner bearing comprises displacing the DE inner distal seal to a service position. The service position can be proximal to the at least one hatch. Typically, displacing the DE inner bearing comprises partly or completely displacing the DE inner bearing through the at least one hatch. Typically, displacing the DE inner bearing comprises displacing the DE inner distal seal to a service position and partly or completely displacing the DE inner bearing through the at least one hatch. The method can comprise releasing the DE inner distal seal. In particular, releasing the DE inner distal seal can occur prior to displacing the DE inner distal seal. For example, the DE inner distal seal can be secured between the DE inner shaft and the DE outer shaft. Releasing of the DE inner distal seal can enable the displacing of the DE inner distal seal.

Typically, displacing the DE inner distal seal can comprise removing the DE inner distal seal through the hatch. For example, removing the DE inner distal seal can comprise proximally displacing the DE inner distal seal to a position in line with the hatch. Upon displacing the DE inner distal seal to the position in line with the hatch, the method can comprise extracting the DE inner distal seal, in particular extracting the DE inner distal seal through the hatch. Typically, displacing the DE inner distal seal comprises displacing the DE inner distal seal to a service position. When the DE inner distal seal is at the service position, the method of maintaining the azimuthing propulsion unit typically comprises servicing the DE inner distal seal. For example, servicing the DE inner distal seal can comprise: repairing, replacing, installing, removing, or any combination thereof. In particular, servicing the DE inner distal seal can be for the entire DE inner distal seal or at least a portion thereof. For example, servicing the DE inner distal seal comprises servicing at least one wearable part. Typically, a seal, such as a lip seal, is a wearable part. The at least one wearable part can be defined as any part which needs to be serviced, and/or is due for service. Typically, servicing the DE inner distal seal is through the hatch. Typically, servicing the DE inner distal seal is within the hatch. Typically, servicing the DE inner distal seal is outside the hatch.

Typically, displacing the DE inner distal seal can comprise axially displacing the DE inner distal seal a distance of at least 0.1 m, 0.2 m, 0.3 m, up to 3 m, or any distance therebetween. For example, displacing the DE inner distal seal can comprise displacing the DE inner distal seal within a region between the DE inner shaft and the DE outer shaft.

Typically, the method of maintaining the azimuthing propulsion unit can further comprise installing the DE inner distal seal and/or replacing the DE inner distal seal, and in particular with a new DE inner distal seal and/or at least a new portion thereof.

According to some embodiments described herein, the method of maintaining the azimuthing propulsion unit can further comprise accessing a DE inner proximal seal through the hatch, and displacing the DE inner proximal seal. The method can comprise releasing the DE inner proximal seal. In particular, releasing the DE inner proximal seal can occur prior to displacing the DE inner proximal seal. For example, the DE inner proximal seal can be secured between the DE inner shaft and the DE outer shaft. Releasing of the DE inner proximal seal can enable the displacing of the DE inner proximal seal.

Typically, displacing the DE inner proximal seal can comprise removing the DE inner proximal seal through the hatch. For example, removing the DE inner proximal seal can comprise distally displacing the DE inner proximal seal to a position in line with the hatch. Upon displacing the DE inner proximal seal to the position in line with the hatch, the method can comprise extracting the DE inner proximal seal, in particular extracting the DE inner proximal seal through the hatch. Typically, displacing the DE inner proximal seal comprises displacing the DE inner proximal seal to a service position. When the DE inner proximal seal is at the service position, the method of maintaining the azimuthing propulsion unit typically comprises servicing the DE inner proximal seal. For example, servicing the DE inner proximal seal can comprise: repairing, replacing, installing, removing, or any combination thereof. In particular, servicing the DE inner proximal seal can be for the entire DE inner proximal seal or at least a portion thereof. For example, servicing the DE inner proximal seal comprises servicing at least one wearable part. Typically, a seal, such as a lip seal, is a wearable part. The at least one wearable part can be defined as any part which needs to be serviced, and/or is due for service. Typically, servicing the DE inner proximal seal is performed through the hatch. Typically, servicing the DE inner proximal seal is within the hatch. Typically, servicing the DE inner proximal seal is performed outside the hatch.

Typically, displacing the DE inner proximal seal can comprise axially displacing the DE inner proximal seal a distance of at least 0.1 m, 0.2 m, 0.3 m, up to 3 m, or any distance therebetween. For example, displacing the DE inner proximal seal can comprise displacing the DE inner proximal seal within a region between the DE inner shaft and the DE outer shaft.

Typically, the method of maintaining the azimuthing propulsion unit can further comprise installing the DE inner proximal seal and/or replacing the DE inner proximal seal, and in particular with a new DE inner proximal seal and/or at least a new portion thereof.

According to some embodiments described herein, the method of maintaining the azimuthing propulsion unit, displacing any of the DE inner bearing, the DE inner distal seal, the DE inner proximal seal, or any combination thereof, can comprise axially displacing along the DE inner shaft. For example, displacing any of the DE inner bearing, the DE inner distal seal, the DE inner proximal seal, or any combination thereof, can comprise sliding, in particular axially, along the DE inner shaft. For example, displacing any of the DE inner bearing, the DE inner distal seal, the DE inner proximal seal, or any combination thereof, can comprise rotating, preferably rotating to displace the DE inner bearing, the DE inner distal seal, the DE inner proximal seal, the DE outer shaft, the DE inner shaft, or any combination thereof.

According to some embodiments described herein, the method of maintaining the azimuthing propulsion unit, comprises an azimuthing propulsion unit which comprises: a DE outer proximal seal, a DE outer bearing, a DE outer distal seal, or any combination thereof. The method typically further comprises displacing any of a DE outer proximal seal, a DE outer bearing, a DE outer distal seal, or any combination thereof. For example, displacing the DE outer proximal seal, the DE outer bearing, the DE outer distal seal, or any combination thereof, can comprise axially displacing along the DE outer shaft and/or sliding along the DE outer shaft and/or radially displacing from the DE outer shaft. Typically, displacing the DE outer proximal seal, the DE outer bearing, the DE outer distal seal, or any combination thereof, comprises displacing the DE outer proximal seal, the DE outer bearing, the DE outer distal seal, or any combination thereof to a service position. When the DE outer proximal seal, the DE outer bearing, the DE outer distal seal, or any combination thereof is at the service position, the method of maintaining the azimuthing propulsion unit typically comprises servicing the DE outer proximal seal, the DE outer bearing, the DE outer distal seal, or any combination thereof. For example, servicing the DE outer proximal seal, the DE outer bearing, the DE outer distal seal, or any combination thereof can comprise: repairing, replacing, installing, removing, or any combination thereof. In particular, servicing the DE outer proximal seal, the DE outer bearing, the DE outer distal seal, or any combination thereof can be for the entire DE outer proximal seal, the DE outer bearing, the DE outer distal seal, or any combination thereof, or at least a portion thereof. For example, servicing the DE outer proximal seal, the DE outer bearing, the DE outer distal seal, or any combination thereof comprises servicing at least one wearable part. The at least one wearable part can be defined as any part which needs to be serviced, and/or is due for service. Typically, servicing the DE outer proximal seal, the DE outer bearing, the DE outer distal seal, or any combination thereof is through the hatch. Typically, servicing the DE outer proximal seal, the DE outer bearing, the DE outer distal seal, or any combination thereof is within the hatch. Typically, servicing the DE outer proximal seal, the DE outer bearing, the DE outer distal seal, or any combination thereof is outside the hatch.

The method of maintaining the azimuthing propulsion unit can comprise servicing the DE inner proximal seal and/or the DE inner distal seal. The method of maintaining the azimuthing propulsion unit can comprise repairing and/or replacing the DE inner proximal seal and/or the DE inner distal seal. Repairing and/or replacing the DE inner proximal seal and/or the DE inner distal seal can occur after accessing the DE inner proximal seal and/or the DE inner distal seal, and in particular, after releasing and displacing the DE inner proximal seal and/or the DE inner distal seal.

Typically, the DE inner distal seal and/or the DE inner proximal seal comprise sealing elements. Sealing elements can comprise sealing lips. Typically, the sealing elements the DE inner distal seal and/or the DE inner proximal seal is replaced, displaced and/or serviced with the respective seal staying in place, after moving the respective seal to a service position or without removing the respective seal from the DE inner shaft. Typically, sealing elements are handled as described without necessarily displacing and/or servicing the entire DE inner distal seal and/or the entire DE inner proximal seal.

In typical embodiments, the method comprises displacing the DE inner distal seal and/or the DE inner proximal seal. In typical embodiments, the method comprises servicing the DE inner distal seal and/or the DE inner proximal seal. In typical embodiments, the method comprises displacing the sealing elements of the DE inner distal seal and/or the DE inner proximal seal. In typical embodiments, the method comprises servicing the sealing elements of the DE inner distal seal and/or the DE inner proximal seal. For example, the DE inner distal seal and/or the DE inner proximal seal comprises a seal ring. For example, the DE inner distal seal and/or the DE inner proximal seal comprises a seal housing. The seal housing can comprise housing rings. The seal housing is typically configured to hold the sealing elements. Typically, servicing comprises cutting the seal rings.

In typical embodiments, the method comprises proximally and/or distally displacing the seal housing. The method typically comprises proximally and/or distally displacing with respect to the DE inner bearing housing. The method typically comprises displacing the seal housing to the hatch. In particular, the method comprises displacing the seal housing to the hatch on the DE outer shaft. The method typically comprises servicing the seal housing. Servicing the seal housing typically comprises dismantling the housing rings. Typically, the housing rings are not removed through the hatch. Dismantling the housing rings typically comprises detaching from one another. Typically, the method comprises displacing sealing lips. Typically, the method comprises removing the sealing lips. Typically, displacing and/or removing the sealing lips is after dismantling the housing rings. In typical embodiments, the method comprises replacing the sealing lips. In typical embodiments, the method comprises repairing the sealing lips. In typical embodiments, the method comprises installing new sealing lips. In typical embodiments, the method comprises bonding and/or joining the sealing lips. In typical embodiments, the method comprises bonding to one another. Typically, bonding is done through the at least one hatch. Typically, in case of elastomer seals, chemicals such as glue, compression, and heat are used in bonding. In typical embodiments, the method comprises joining the sealing lips on the DE shaft. Typically, in case of polyurethane seals, bonding and/or joining comprises heating two ends of the seal ring and pressing the two ends together. In typical embodiments, the method comprises assembling the seal housing. In typical embodiments, the method comprises reassembling the seal housing. In typical embodiments, the method comprises assembling the housing rings.

Typically, the DE inner shaft and/or the DE outer shaft can be supported. Supporting the DE inner shaft and/or the DE outer shaft can provide more room to manipulate the remaining components in the azimuthing propulsion unit.

Typically, a user can perform the method of maintaining the azimuthing propulsion unit described herein. For example, the user can open the hatch and can access the DE inner bearing, the DE inner distal seal, and/or the DE inner proximal seal. The user can further perform the displacing of the DE inner bearing, the DE inner distal seal, and/or the DE inner proximal seal. For example, the user can reach into the region accessible through the at least one hatch, and can displace any of the aforementioned components and/or subsidies thereof. The user can perform the opening of the hatch and/or the displacing of the DE inner bearing, the DE inner distal seal, and/or the DE inner proximal seal using their labour and/or tools. For example, the user can employ at least one rod, threaded bar, grappling tool, and/or any tool suitable for releasing and displacing the DE inner bearing, the DE inner distal seal, and/or the DE inner proximal seal.

For example, the user can access the DE outer bearing, the DE outer distal seal, and/or the DE outer proximal seal. The user can further perform the displacing of the DE outer bearing, the DE outer distal seal, and/or the DE outer proximal seal. The user can perform the displacing of the DE outer bearing, the DE outer distal seal, and/or the DE outer proximal seal using their labour and/or tools. For example, the user can employ at least one rod, threaded bar, grappling tool, and/or any tool suitable for releasing and displacing the DE outer bearing, the DE outer distal seal, and/or the DE outer proximal seal.

Embodiments of the present invention provide azimuthing propulsion units, in particular azimuthing propulsion units with an improved drive end shaft structure enabling inner bearing and seal change. With exemplary embodiments, the bearings and/or the seals might undergo maintenance and/or might be changed without it being mandatory to bring the vessel into a dry dock. For example, before removing the seals, shafts might be sealed against the water with some temporary seals applied from the waterside of the pod hull of the pod to allow a seal change whilst the vessel is in a swimming condition.

### BRIEF DESCRIPTION OF THE DRAWINGS

The accompanying drawings relate to embodiments of the disclosure and are described in the following:
- FIG 1a: schematically illustrates an azimuthing propulsion unit according to the embodiments described herein;
- FIG 1b: schematically illustrates an azimuthing propulsion unit according to the embodiments described herein;
- FIG 1c: schematically illustrates an azimuthing propulsion unit according to the embodiments described herein;
- FIG 2: schematically illustrates a cross-section of an isometric view of an azimuthing propulsion unit according to the embodiments described herein;
- FIG 3: illustrates a flow chart of a method of maintaining an azimuthing propulsion unit according to the embodiments described herein;
- FIG 4: illustrates a flow chart of a method of maintaining an azimuthing propulsion unit according to the embodiments described herein;
- FIG 5: illustrates a flow chart of a method of maintaining an azimuthing propulsion unit according to the embodiments described herein;
- FIG 6: illustrates a flow chart of a method of maintaining an azimuthing propulsion unit according to the embodiments described herein; and
- FIG 7: illustrates a flow chart of a method of maintaining an azimuthing propulsion unit according to the embodiments described herein.

### DETAILED DESCRIPTION OF EMBODIMENTS

Reference will now be made in detail to the various embodiments of the disclosure, one or more examples of which are illustrated in the figures. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield a further embodiment. It is intended that the description includes such modifications and variations. In the figures, elements can be depicted with exaggerated dimensions to improve the comprehensibility of the detailed description of embodiments. In particular, relations of lengths and widths of components shown can be distorted. Further, some elements can be depicted with enlarged dimensions while other elements in the same figure are depicted, relatively, with reduced dimensions.

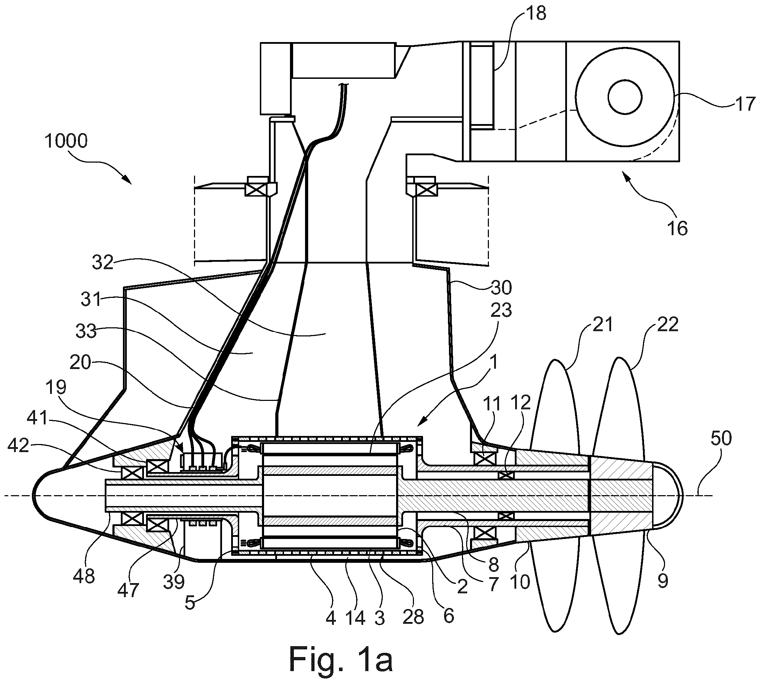

FIG 1a schematically illustrates an azimuthing propulsion unit 1000 according to typical embodiments described herein. The azimuthing propulsion unit 1000 of Fig. 1a comprises a dual rotor electric motor 1. The dual rotor electric motor 1 can also be described as contra rotating electric motor. The dual rotor electric motor 1 is typically arranged substantially horizontally and substantially centrally within the azimuthing propulsion unit 1000. Particularly, the dual rotor electric motor 1 is arranged within a pod 30 of the azimuthing propulsion unit 1000.

The dual rotor electric motor 1 comprises an inner rotor 2 and an outer rotor 3. The inner rotor 2 is arranged within the outer rotor 3. Inner rotor 2 and outer rotor 3 are arranged coaxially with respect to each other. The inner rotor 2 and the outer rotor 3 are configured to rotate about a rotation axis 50. The rotation axis 50 is a longitudinal axis of the azimuthing propulsion unit 1000. The inner rotor 2 drives an inner shaft propeller 10 and the outer rotor 3 drives an outer shaft propeller 9. The outer shaft propeller 9 and the inner shaft propeller 10 are arranged coaxially and rotate about the rotation axis 50. The outer shaft propeller 9 and the inner shaft propeller 10 form a contra rotating propeller unit. In the embodiment of Fig. 1a, the outer shaft propeller 9 and the inner shaft propeller 10 substantially have the same diameter. In embodiments not shown in Fig. 1a the outer shaft propeller 9 can have a diameter different from the diameter of the inner shaft propeller 10. Exemplarily, the outer shaft propeller 9 can have a diameter of at least 6 m, exemplarily of 6.1 m, and the inner shaft propeller 10 can have a diameter of at most 6 m, exemplarily of 5.575 m.

The outer rotor 3 of the dual rotor electric motor 1 typically comprises a perforated tube 4, as shown in the typical embodiment of Fig. 1a. The perforated tube 4 mechanically supports the outer rotor winding and comprises a plurality of openings. The plurality of openings of the perforated tube 4 are configured to pass air from an exterior of the dual rotor electric motor 1 into an interior of the dual rotor electric motor 1, and vice versa. Warm air, particularly heated by the dual rotor electric motor 1, can pass from an air gap 23 between the inner rotor 2 and the outer rotor 3 through the perforated tube to an annular air channel 14.

The perforated tube 4 transmits a torque of the outer rotor 3 to outer rotor end flanges 5, 6. A non-drive end, NDE, outer rotor end flange 5 connects the perforated tube 4 to an NDE outer shaft 47. A drive end, DE, outer rotor end flange 6 connects the perforated tube 4 to a DE outer shaft 7. The DE outer shaft 7 transmits the torque of the outer rotor 3 to the outer shaft propeller 9. For example, the DE outer shaft 7 is mechanically coupled to the outer rotor 3. The outer shaft propeller 9 comprises a plurality of first blades 21, of which two are visible in Fig. 1a. The inner rotor 2 is connected to an NDE inner shaft 48 and to a DE inner shaft 8. For example, the DE inner shaft 8 is mechanically coupled to the inner rotor 2 and/or the NDE inner shaft 48 is mechanically coupled to the inner rotor 2. The DE inner 8 shaft transmits the torque of the inner rotor 2 to the inner shaft propeller 10. The inner shaft propeller 10 comprises a plurality of second blades 22, of which two are visible in Fig. 1a. In the embodiment of Fig. la, the outer shaft propeller 9 and the inner shaft propeller 10 are arranged in a pulling configuration. In particular, the first blades 21 and the second blades 22 are configured to operate in a pulling mode.

The NDE inner shaft 48 is supported in the pod 30 by an NDE inner bearing 42. The NDE outer shaft 47 is supported in the pod 30 by an NDE outer bearing 41. The NDE outer bearing 41 and the NDE inner bearing 42 typically comprise an oil seal, respectively. The DE outer shaft 7 is supported in the pod 30 by a DE outer bearing 11. The DE inner shaft 7 is supported in the DE outer shaft 8 by a DE inner bearing 12. The DE outer bearing 11 and the DE inner bearing 12 typically comprise an oil and a water seal, respectively. The oil seal can prevent oil from exiting the pod 30. The water seal can prevent water from entering the pod 30.

The dual rotor electric motor 1 is provided with electric energy via a slip ring unit 19. The slip ring unit 19 is typically arranged on the non-drive end side of the dual rotor electric motor 1 and in particular to contact the NDE outer shaft 47 as shown in Fig. 1a. The NDE outer shaft 47 and the NDE outer rotor end flange 5 are configured to electrically connect the slip ring unit 19 to the dual rotor electric motor 1. The slip ring unit 19 comprises at least one sliding contact to transmit electricity from power supply cables 20 to the dual rotor electric motor 1 and particularly to the outer rotor 3 of the dual rotor electric motor 1. From the outer rotor 3, electricity is provided to windings of the dual rotor electric motor 1. The power supply cables 20 provide electrical power from a marine vessel, and in particular from a power supply of the marine vessel to the dual rotor electric motor 1 via the slip ring unit 19. The slip ring unit 19 comprises a slip ring unit housing 39. The slip ring unit housing 39 separates the slip ring unit 19 from a further interior of the pod 30 and in particular is configured to prevent dust generated inside the slip ring unit 19, in particular generated by the at least one sliding contact of the slip ring unit 19, from escaping to the interior of the pod 30.

Inside the pod 30 of the azimuthing propulsion unit 1000, air is circulated. The azimuthing propulsion unit 1000 comprises a cooling air unit 16. In the embodiment of Fig. 1a, the cooling air unit 16 is arranged within a hull of a marine vessel. In the typical embodiment shown in Fig. 1a, the cooling air unit 16 comprises an air fan 17 to circulate air. The cooling air unit 16 typically comprises a heat exchanger 18. Through the heat exchanger 18, warm air entering the heat exchanger 18 from the pod 30 is cooled with heat being at least partially transferred to a cooling agent of the heat exchanger 18. The cooling air unit 16 provides cool air to the dual rotor electric motor 1 via a DE ingoing air channel 31 and an NDE ingoing air channel 32 in the pod 30. The DE ingoing air channel 31 is physically separated from an outgoing air channel 33 by an DE air channel separating wall 34 in Fig. 1a. The NDE ingoing air channel 32 is physically separated from the outgoing air channel 33 by an NDE air channel separating wall 35 in Fig. 1a. Typically, the outgoing air channel 33 substantially extends in the center of the pod 30 and in particular along a vertical central axis of the pod 30. Air passing through the DE ingoing air channel 31 and/or the NDE ingoing air channel 32 passes through openings of the perforated tube 4 and/or the outer rotor end flanges 5, 6 into an interior of the dual rotor electric motor 1. Within the dual rotor electric motor 1, the air can be heated by the dual rotor electric motor 1, in particular when in operation. The air can exit the dual rotor electric motor 1 via openings of the perforated tube 4 towards the annular air channel 14. The annular air channel 14 is connected to the outgoing air channel 33.

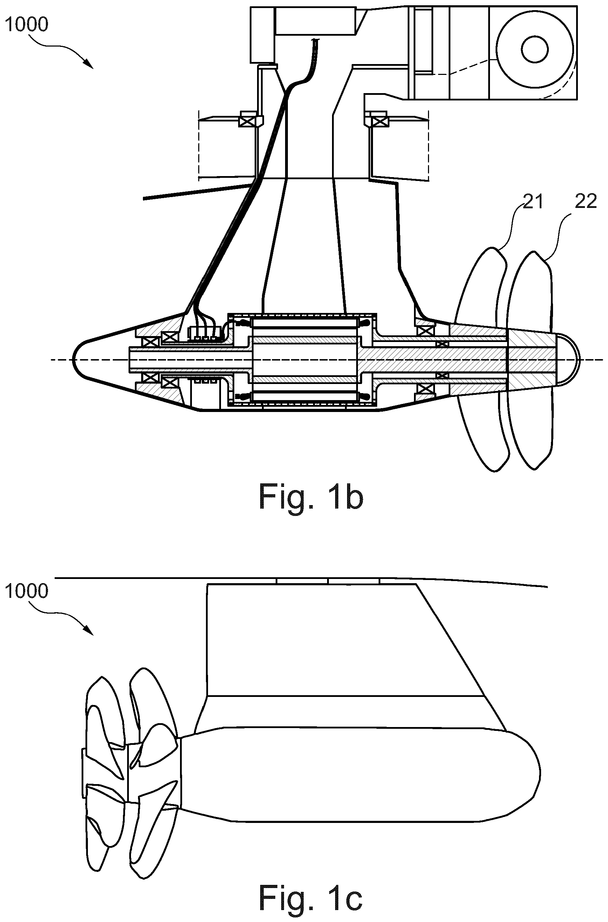

In Fig. 1b, the azimuthing propulsion unit 1000 is configured to operate in a pushing mode. In particular, the first blades 21 and the second blades 22 are configured to operate in a pushing mode. In Fig. 1c, a side view of the azimuthing propulsion unit 1000 of the embodiment of Fig. 1b is schematically shown.

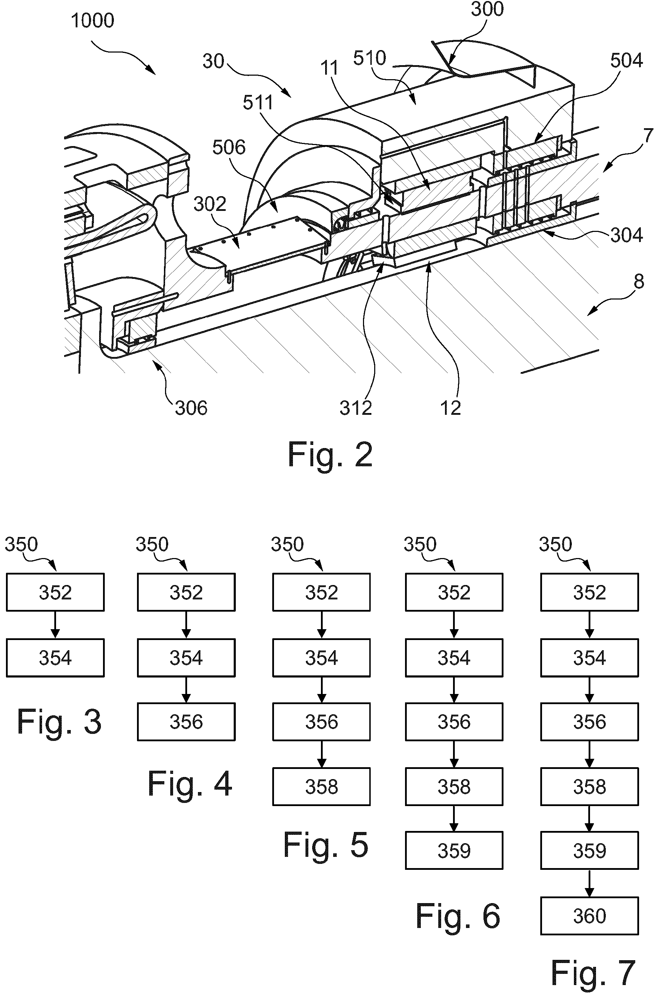

FIG 2 schematically illustrates a cross-section of an isometric view of an azimuthing propulsion unit 1000 according to typical embodiments described herein. The azimuthing propulsion unit 1000 comprises a pod 30 and a pod hull 300. A rotatable drive end (DE) inner shaft 8, runs at least partially within a DE outer shaft 7. A DE inner bearing 12 is arranged between the DE outer shaft 7 and the DE inner shaft 8. The DE outer shaft 7 comprises a hatch 302.

The exemplary azimuthing propulsion unit 1000 of Fig. 2 as described herein can permit the azimuthing propulsion unit 1000 to be maintained without requiring the marine vessel to be necessarily dry-docked. Dry docking a marine vessel is a time and resource consuming process which ultimately adversely affects an efficiency of the marine vessel.

The hatch 302 is configured to provide access to the DE inner bearing 12. The hatch 302 is, for example, configured to be accessed by a user from within the azimuthing propulsion unit 1000. In order for the hatch 302 to provide sufficient access to the DE inner bearing 12, the hatch 302 typically has substantially the size of a man-hole.

The embodiment of Fig. 2 comprises the DE inner bearing 12 with inner bearing pads 312. For example, the DE inner bearing 12 can comprise two or more inner bearing pads 312. The inner bearing pads 312 are arranged around the DE inner shaft 8, and in particular around an entire circumference of the DE inner shaft 8.

The embodiment of Fig, 2 comprises a DE inner distal seal 304, wherein the DE inner distal seal 304 is arranged between the DE inner shaft 8 and the DE outer shaft. , The DE inner distal seal 304 is arranged towards a drive end (DE) of the azimuthing propulsion unit 1000.

The exemplary azimuthing propulsion unit 1000 of Fig. 2 comprises a DE inner proximal seal 306, wherein the DE inner proximal seal 306 is arranged between the DE inner shaft 8 and the DE outer shaft. The DE inner proximal seal 306 is arranged towards a non-drive end (NDE) of the azimuthing propulsion unit 1000.

The azimuthing propulsion unit 1000 shown in Fig. 2 comprises a DE outer bearing 11. As with typical embodiments, the DE outer bearing 11 comprises outer bearing pads 511.

The DE inner bearing 12 and the DE outer bearing 11 are arranged coaxially on the rotation axis 50. In the exemplary embodiment of Fig. 2, the DE outer bearing 11 is at least partially overlapping the DE inner bearing 12.

FIG. 3 illustrates a flow chart of a method 350 of maintaining an azimuthing propulsion unit according to the embodiments described herein. The method 350 comprises opening a hatch of a DE outer shaft of the azimuthing propulsion unit 352. The method 350 comprises accessing a DE inner bearing arranged between the DE outer shaft and a DE inner shaft 354.

FIG. 4 illustrates a flow chart of a method 350 of maintaining an azimuthing propulsion unit according to the embodiments described herein. The method 350comprises opening a hatch of a DE outer shaft of the azimuthing propulsion unit 352. The method 350comprises accessing a DE inner bearing arranged between the DE outer shaft and a DE inner shaft 354. The method 360 further comprises, after accessing the DE inner bearing the hatch, displacing the DE inner bearing 356.

FIG. 5 illustrates a flow chart of a method 350of maintaining an azimuthing propulsion unit according to the embodiments described herein. The method 350comprises opening a hatch of a DE outer shaft of the azimuthing propulsion unit 352. The method 350comprises accessing a DE inner bearing arranged between the DE outer shaft and a DE inner shaft 354. The method 350further comprises, after accessing the DE inner bearing the hatch, displacing the DE inner bearing 356. The method 350further comprises, after displacing the DE inner bearing, accessing a DE inner distal seal through the hatch, and displacing the DE inner distal seal 358.

FIG. 6 illustrates a flow chart of a method 350of maintaining an azimuthing propulsion unit according to the embodiments described herein. The method 350comprises opening a hatch of a DE outer shaft of the azimuthing propulsion unit 352. The method 350comprises accessing a DE inner bearing arranged between the DE outer shaft and a DE inner shaft 354. The method 350further comprises, after accessing the DE inner bearing the hatch, displacing the DE inner bearing 356. The method 350further comprises, after displacing the DE inner bearing, accessing a DE inner distal seal through the hatch, and displacing the DE inner distal seal 358. The method 350, further comprising, accessing a DE inner proximal seal arranged between the DE outer shaft and a DE inner shaft 359.

FIG. 7 illustrates a flow chart of a method 350 of maintaining an azimuthing propulsion unit according to the embodiments described herein. The method 350 comprises opening a hatch of a DE outer shaft of the azimuthing propulsion unit 352. The method 350 comprises accessing a DE inner bearing arranged between the DE outer shaft and a DE inner shaft 354. The method 350 further comprises, after accessing the DE inner bearing the hatch, displacing the DE inner bearing 356. The method 350 further comprises, after displacing the DE inner bearing, accessing a DE inner distal seal through the hatch, and displacing the DE inner distal seal 358. The method 350, further comprising, accessing a DE inner proximal seal arranged between the DE outer shaft and a DE inner shaft 359. The method 350, wherein the azimuthing propulsion unit comprises a DE outer bearing, a DE outer distal seal, a DE outer proximal seal, or any combination thereof, the method 350 further comprising displacing any of: a DE outer proximal seal, a DE outer bearing, a DE outer distal seal, or any combination thereof (360).

While the foregoing is directed to embodiments of the invention, other and further embodiments of the invention can be devised without departing from the basic scope thereof, and the scope thereof is determined by the appended claims.

## Claims

1. An azimuthing propulsion unit (1000), the azimuthing propulsion unit (1000) comprising:
- a rotatable drive end (DE) inner shaft (8);
- a rotatable DE outer shaft (7), wherein the DE inner shaft (8) runs at least partially within the DE outer shaft (7); and
- a DE inner bearing (12) arranged between the DE outer shaft (7) and the DE inner shaft (8);
- wherein the DE outer shaft (7) comprises at least one hatch (302).

2. The azimuthing propulsion unit (1000), wherein the hatch (302) is configured to provide an access to the DE inner bearing (12).

3. The azimuthing propulsion unit (1000) of claim 2, wherein the hatch (302) is configured to be accessed by a user from within the azimuthing propulsion unit (1000).

4. The azimuthing propulsion unit (1000) of any of claims 1 to 3, wherein the DE inner bearing (12) comprises at least one inner bearing pad (312).

5. The azimuthing propulsion unit (1000) of any of claims 1 to 4, further comprising a DE inner distal seal (304), wherein the DE inner distal seal (304) is arranged between the DE inner shaft (8) and the DE outer shaft (7), and wherein the DE inner distal seal (304) is arranged towards a drive end.

6. The azimuthing propulsion unit (1000) of any of claims 1 to 5, further comprising a DE inner proximal seal (306), wherein the DE inner proximal seal (306) is arranged between the DE inner shaft (8) and the DE outer shaft (7), and wherein the DE inner proximal seal (306) is arranged towards a non-drive end.

7. The azimuthing propulsion unit (1000) of any of claims 1 to 6, further comprising a pod (30), wherein the pod (30) comprises a pod hull (300).

8. The azimuthing propulsion unit (1000) of any of claims 1 to 7, further comprising a DE outer bearing (11), wherein the DE outer bearing (11) preferably comprises at least one outer bearing pad.

9. The azimuthing propulsion unit (1000) of claim 8, wherein the DE inner bearing (12) and the DE outer bearing (11) are arranged coaxially to a rotation axis (50), wherein the DE outer bearing (11) is at least partially overlapping the DE inner bearing (12).

10. A method (350) of maintaining an azimuthing propulsion unit, particularly the azimuthing propulsion unit according to any of claims 1 to 9; the method comprising:
opening a hatch of a drive end (DE) outer shaft of the azimuthing propulsion unit (352); and
accessing a DE inner bearing arranged between the DE outer shaft and a DE inner shaft (354).

11. The method of claim 10, comprising, after accessing the DE inner bearing through the hatch: displacing the DE inner bearing (356).

12. The method of claim 11, comprising, after displacing the DE inner bearing, accessing a DE inner distal seal through the hatch; and
displacing the DE inner distal seal (358).

13. The method of any of claims 10 to 12, comprising, accessing a DE inner proximal seal arranged between the DE outer shaft and a DE inner shaft; and
displacing the DE inner proximal seal (359).

14. The method of any of claims 10 to 13, wherein displacing any of: the DE inner bearing, the DE inner distal seal, the DE inner proximal seal, or any combination thereof, comprises axially displacing along the DE inner shaft.

15. The method of any of claims 10 to 14, further comprising displacing any of: a DE outer proximal seal, a DE outer bearing, a DE outer distal seal, or any combination thereof (360).
